**Europäisches Patentamt**

**European Patent Office**

**Office européen des brevets**

(11) Veröffentlichungsnummer: **0 264 638**
**B1**

(12) **EUROPÄISCHE PATENTSCHRIFT**

(45) Veröffentlichungstag der Patentschrift:
**10.01.90**

(21) Anmeldenummer: **87113747.7**

(22) Anmeldetag: **19.09.87**

(51) Int. Cl.⁴: **E03D 3/04**

(54) **Druckspüler für Wasserklosetts.**

(30) Priorität: **14.10.86 DE 3634954**

(43) Veröffentlichungstag der Anmeldung:
**27.04.88 Patentblatt 88/17**

(45) Bekanntmachung des Hinweises auf die Patenterteilung:
**10.01.90 Patentblatt 90/2**

(84) Benannte Vertragsstaaten:
**AT BE CH DE ES FR GB GR IT LI LU NL SE**

(56) Entgegenhaltungen:
**EP-A- 0 109 467**
**GB-A- 2 062 184**
**US-A- 2 872 150**
**US-A- 3 674 237**

(73) Patentinhaber: **Metallwerke Gebr. Seppelfricke GmbH & Co., Haldenstrasse 27, D-4650 Gelsenkirchen(DE)**

(72) Erfinder: **Karl, Reinhard, Dipl.-Ing., Melsenstrasse 27, D-4370 Marl-Hamm(DE)**
Erfinder: **Kleineberg, Manfred, Am Hebewerk 77, D-4355 Waltrop(DE)**

(74) Vertreter: **Louis, Günter, Dipl.-Ing. et al, Patentanwälte Dipl.-Ing. W. Louis, Dipl.-Ing. G. Louis Stubertal 3, 4300 Essen 1(DE)**

## Beschreibung

Die Erfindung bezieht sich auf einen Druckspüler für Wasserklosetts gemäß dem Oberbegriff des Patentanspruchs 1.

Bei den bekannten Druckspülern der vorgenannten Art hat das Entlastungsventil einen Verschlußstößel, der durch eine direkt an ihm angreifende Rückstellfeder in die Schließstellung gedrückt wird und an einer mit dem Verschlußstößel verbundenen Druckspülertaste in diez Öffnungsstellung verschiebbar ist. Beim Öffnen des Entlastungsventils erfolgt durch dessen großen Durchlaß eine rasche Druckentlastung der Druckausgleichskammer, so daß der Wasserdruck am Eintritt des Druckspülergehäuses den Spülventilkolben schnell vom Absperrsitz anheben und in die Öffnungsstellung verstellen kann. Dadurch beginnt mit dem Betätigen der Druckspülertaste sofort ein starker Spülvorgang und entsteht bei Flachspülklosetts der Nachteil, daß die Spülung zu heftig einsetzt und über den Klosettsitz spritzt. Das Entlastungsventil bleibt nur so lange offen, wie die Druckspülertaste von Hand gedrückt wird. Wird die Druckspülertaste nur ganz kurz gedrückt, schließt das Entlastungsventil mittels der am Verschlußstößel angreifenden Feder sofort, so daß mit dem Loslassen der Druckspülertaste sofort der Druckaufbau in der Druckausgleichskammer und damit also auch der Schließvorgang des Spülventilkolbens beginnt. Durch zu kurze Betätigung der Druckspülertaste entsteht der Nachteil, daß die Spülzeit zu kurz und die Spülmenge zu klein wird und die in der Praxis geforderte Mindestspülmenge nicht eingehalten wird.

Die Erfindung hat daher zur Aufgabe, einen Druckspüler der eingangs genannten Art zu schaffen, der auch bei kräftigem Drücken der Druckspülertaste einen heftig einsetzenden und spritzenden Spülvorgang vermeidet und auch bei nur kurzem Drücken der Druckspülertaste selbsttätig eine vorbestimmte Öffnungszeit und damit eine vorbestimmte Spülmenge einhält. Dazu will die Erfindung weiterhin die Möglichkeit schaffen, daß analog wie schon mit Spülkästen auch mit einem Druckspüler fakultativ mit der üblichen großen Spülmenge oder in bestimmten Fällen auch mit einer reduzierten, zugelassen kleinen Spülmenge gespült werden kann und hierbei ebenfalls die kleine Spülmenge selbsttätig vom Druckspüler eingehalten wird.

Diese Aufgabe wird gemäß der Erfindung in erster Linie durch die im kennzeichnenden Teil des Patentanspruchs 1 enthaltenen Merkmale gelöst. Es genügt ein Betätigungsimpuls auf die Druckspülertaste, um das Entlastungsventil durch Abdrücken des Verschlußstößels vom Verschlußsitz zu öffnen, wonach der Verschlußstößel von selbst noch weiter abfällt, bis er sich auf den Mitnehmeranschlag des Spülventilkolbens aufsetzt. Nach dem Öffnen des Entlastungsventils fließt das Wasser aber nur verzögert, verlangsamt durch die Entlastungsdüse aus der Druckausgleichskammer ab, und zwar etwas mehr als durch die Zulaufdüse Wasser wieder einfließt, so daß der Spülventilkolben langsamer durch den Wasserdruck im Gehäuseeintritt geöffnet wird und der Spülvorgang allmählicher einsetzt und vor allem bei Flachspülklosetts kein Spritzen über den Klosettsitz hinweg mehr verursacht. Die Öffnungsgeschwindigkeit des Spülventilkolbens wird durch die Differenz der Querschnitte der beiden Düsenbohrungen bestimmt und läßt sich um so mehr auf ein gewünschtes Maß verlangsamen, je weniger die Entlastungsdüse größer bemessen wird als die Zulaufdüse. Auch wenn die Druckspülertaste nach einer kurzen Betätigung schon wieder losgelassen wird, schließt das Entlastungsventil von selbst erst dann, wenn der infolge der Druckentlastung der Druckausgleichskammer hochsteigende und dabei den Verschlußstößel mitnehmende Spülventilkolben gegen Ende seines Hubes den Verschlußstößel gegen den Verschlußsitz des Entlastungsventils andrückt. Ab dann beginnt der Druckaufbau in der Druckausgleichskammer und wird der Schließvorgang des Spülventilkolbens eingeleitet, dessen Geschwindigkeit durch die Größe der Zulaufdüse bestimmt wird. Auch bei nur kurzer, impulsartiger Betätigung der Druckspülertaste hält der Druckspüler vom Beginn des Öffnungsvorganges bis zum Ende des Schließvorganges des Spülventilkolbens selbsttätig eine gleichbleibende Spülzeit und Spülmenge ein.

In vorteilhafter Weiterbildung des erfindungsgemäßen Druckspülers besteht derjenige Teil des Entlastungsventils, der den Verschlußsitz für den Verschlußstößel enthält, aus einem Kolbenkörper, der im Druckspülergehäuse abgedichtet und gleichachsig zum Verschlußstößel verschiebbar ist und der im Gehäuse mittels der Druckspülertaste, sobald die Taste nach dem Abdrücken des Verschlußstößels vom Verschlußsitz gegen den Kolbenkörper anschlägt, bis gegen eine Hubbegrenzung herunterschiebbar ist. Durch leichtes Drücken der Druckspülertaste wird nur der Verschlußstößel vom Verschlußsitz abgedrückt und zum selbsttätigen Absinken bis auf den Mitnehmeranschlag des Spülventilkolbens gebracht, so daß sich der Spülventilkolben um denjenigen Weg zum Schließen des Entlastungsventils anhebt und zum Schließen des Spülventils wieder absenkt, der die vorbestimmte lange Spülzeit beziehungsweise die normale große Spülmenge ergibt. Durch festeres Drücken der Druckspülertaste wird nicht nur der Verschlußstößel zum Öffnen des Entlastungsventils angestoßen, sondern kann zusätzlich auch der Kolbenkörper im Druckspülergehäuse heruntergeschoben werden. Dadurch wird der Hubweg verkürzt den der hochsteigende Spülventilkolben benötigt, um den Verschlußstößel gegen den Verschlußsitz am Kolbenkörper anzuheben und das Entlastungsventil zu schließen und damit in der Druckausgleichskammer den Druckaufbau einzuleiten, durch den einerseits der Spülventilkolben in die Schließstellung herunterbewegt wird und andererseits der Kolbenkörper bei geschlossen bleibendem Entlastungsventil in die Ausgangsstellung hochgeschoben wird. Insgesamt ergibt sich durch das Herunterschieben des Kolbenkörpers eine kürzere Öffnungs- und Schließphase des Spülventilkolbens und damit eine geringere Spülmenge, wobei mit der Hubbegrenzung diejenige tiefste Stellung des Verschlußstößels festgelegt werden kann, bei der der Druckspüler selbsttätig die kleinste zugelassene Spülmenge einhält.

In der Zeichnung sind zwei Ausführungsbeispiele des erfindungsgemäßen Druckspülers dargestellt, und zwar zeigen jeweils im vertikalen Mittelschnitt

Figur 1 ein erstes Ausführungsbeispiel in der geschlossenen Ruhestellung,

Figur 2 das Ausführungsbeispiel der Figur 1 zu Beginn eines Spülvorganges,

Figur 3 ein zweites Ausführungsbeispiel in der Stellung zu Beginn eines Spülvorganges mit großer Spülmenge,

Figur 4 das Ausführungsbeispiel der Figur 3 in der Stellung zu Beginn eines Spülvorganges mit kleiner Spülmenge.

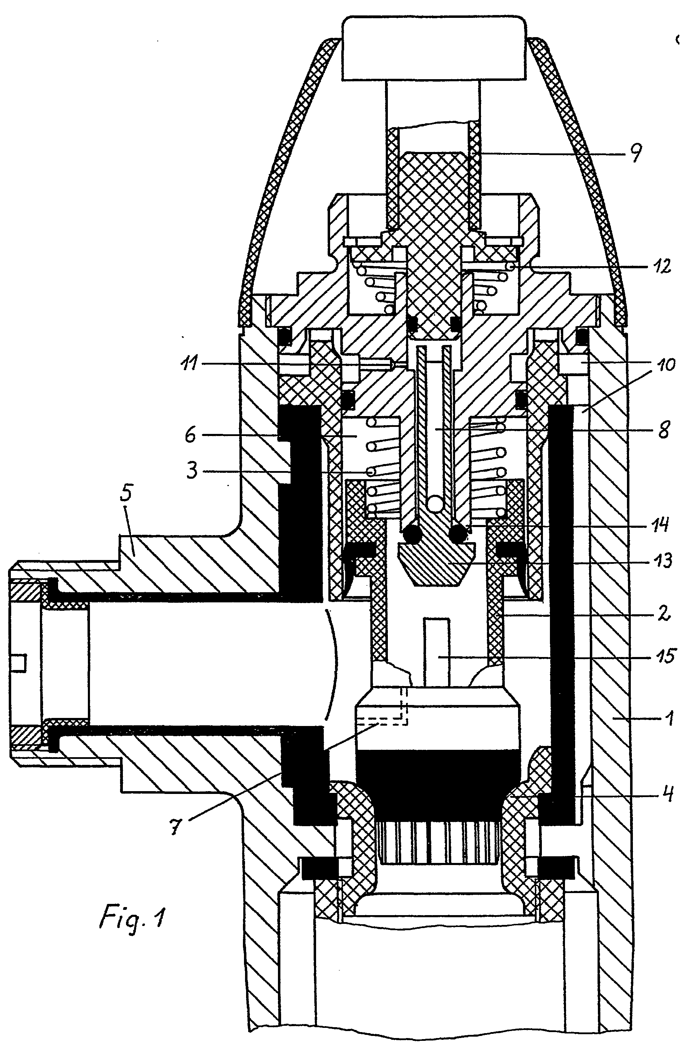

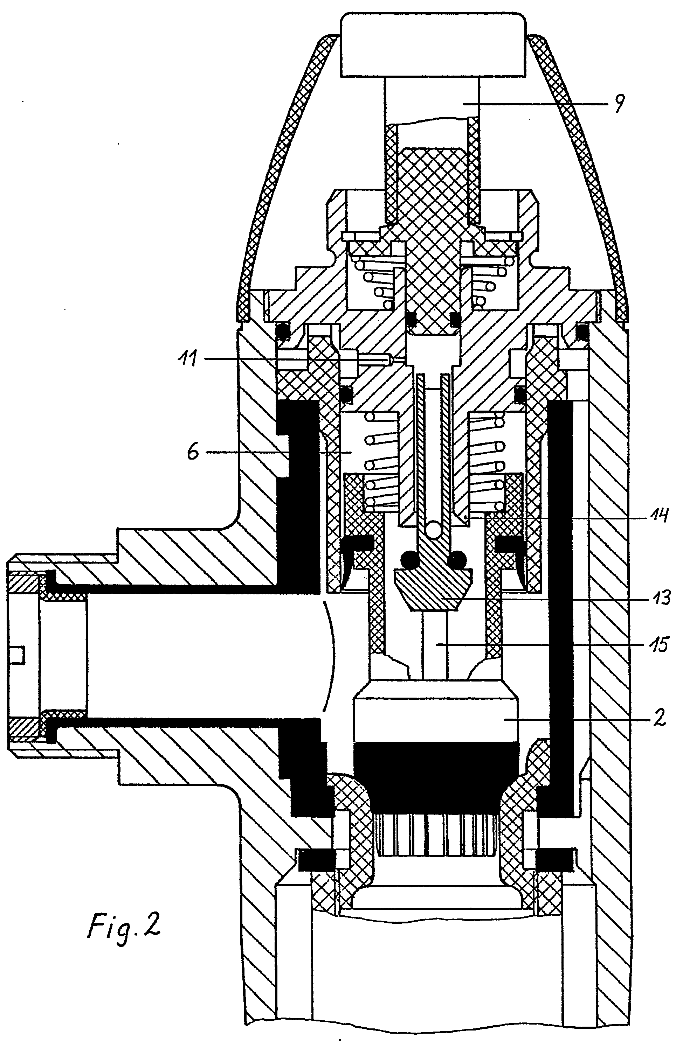

Der Druckspüler der Figuren 1 und 2 enthält in seinem Gehäuse 1 einen Spülventilkolben 2, der mittels einer Feder 3 auf einen Absperrsitz 4 im Gehäuse 1 gedrückt wird Der im Gehäuseeintritt 5 herrschende, in Öffnungsrichtung auf den Spülventilkolben 2 einwirkende Wasserdruck wird durch den in der Schließrichtung aufgebauten und einwirkenden Wasserdruck in einer Druckausgleichskammer 6 kompensiert, die durch eine im Spülventilkolben 2 ausgebildete Zulaufdüse 7 mit dem Gehäuseeintritt 5 verbunden ist. Durch Öffnen eines Entlastungsventils 8 mittels einer Druckspülertaste 9 kann Wasser aus der Druckausgleichskammer 6 in einen zum Wasseraustrittsende des Gehäuses führenden Ablaufkanal 10 abfließen und tritt in der Druckausgleichskammer eine Druckentlastung ein, so daß der Spülventilkolben 2 durch den am Gehäuseeintritt 5 herrschenden Wasserdruck gegen die Kraft der Feder 3 in die Öffnungsstellung angehoben werden kann. Durch Schließen des Entlastungsventils setzt wieder durch die Zulaufdüse 7 ein Druckaufbau in der Druckausgleichskammer 6 ein und wird dadurch der Schließvorgang des Spülventilkolbens 2 unter Mitwirkung der Feder 3 eingeleitet.

Das Entlastungsventil ist mit einer Entlastungsdüse 11 ausgebildet, die auch bei vollständiger Öffnung des Entlastungsventils den Wasseraustritt von der Druckausgleichskammer 6 in den Ablaufkanal 10 drosselt und verzögert und deren Drosselquerschnitt um einen vorbestimmten kleinen Betrag größer ist als der Drosselquerschnitt der Zulaufdüse 7. Da hierdurch die Entlastungsdüse 11 bei geöffnetem Entlastungsventil 8 nur wenig mehr Wasser aus der Druckausgleichskammer 6 entweichen läßt als durch die Zulaufdüse 7 in die Kammer 6 nachfließen kann, entlastet sich die Kammer 6 verzögert und verlangsamt, wird dadurch der Spülventilkolben 2 langsamer vom Absperrsitz 4 angehoben als es bisher bei den bekannten Druckspülern der Fall war, und setzt infolgedessen der Spülvorgang allmählicher, langsamer an Intensität zunehmend, ein.

An der Druckspülertaste 9 greift eine Rückstellfeder 12 an, gegen deren Rückstellkraft die Taste 9 zum Öffnen des Entlastungsventils herunterdrückbar ist. Das Entlastungsventil 8 weist einen Verschlußstößel 13 auf, der nicht mit der Druckspülertaste 9 in einteiliger Art zusammenhängt oder verbunden ist, sondern von der Taste 9 abgetrennt ist. Es genügt ein Betätigungsimpuls auf die Druckspülertaste 9, um durch einen Berührungsstoß der Taste 9 den Verschlußstößel 13 vom Verschlußsitz 14 des Entlastungsventils nach unten abzudrücken. Von diesem Moment an setzt die Druckentlastung in der Kammer 6 ein und kann der Verschlußstößel 13 selbsttätig, frei fallend bis auf einen Mitnehmeranschlag 15 des Spülventilkolbens 2 absinken. Der infolge der Druckentlastung der Kammer 6 hochsteigende Spülventilkolben 2 nimmt während seines Öffnungsvorganges den Verschlußstößel 13 mit. Sobald der Spülventilkolben 2 gegen Ende seines Öffnungsvorganges den Verschlußstößel 13 an den Verschlußsitz 14 angedrückt hat und das Entlastungsventil 8 geschlossen ist, setzt der Schließvorgang des Spülventilkolbens 2 ein. Durch die Öffnungsgeschwindigkeit des Spülventilkolbens 2, die von der Querschnittsdifferenz der beiden Düsenbohrungen 11 und 7 abhängt, durch die Schließgeschwindigkeit des Kolbens 2, die von der Größe der Düsenbohrung 7 allein abhängt, und durch das Maß, um das der Verschlußstößel 13 vom Anliegen am Verschlußsitz 14 bis zum Aufsetzen auf den Mitnehmeranschlag 15 absinken kann, wird unabhängig von der Handbetätigung der Druckspülertaste 9 selbsttätig eine vorbestimmte und gleichbleibende Spülzeit und Spülmenge eingehalten.

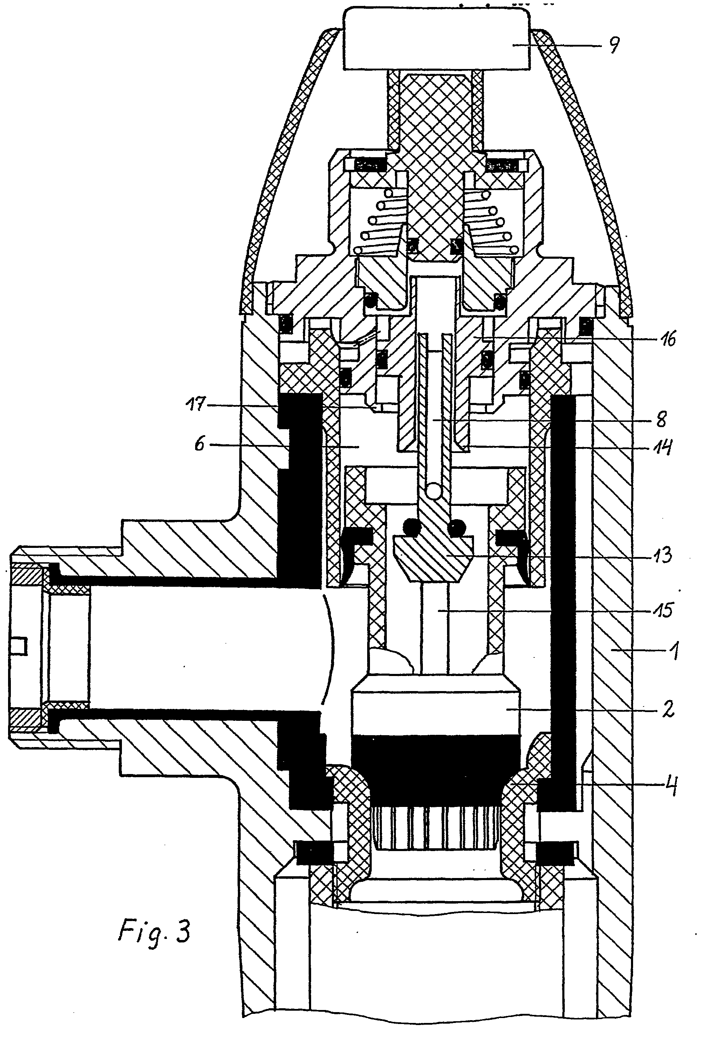

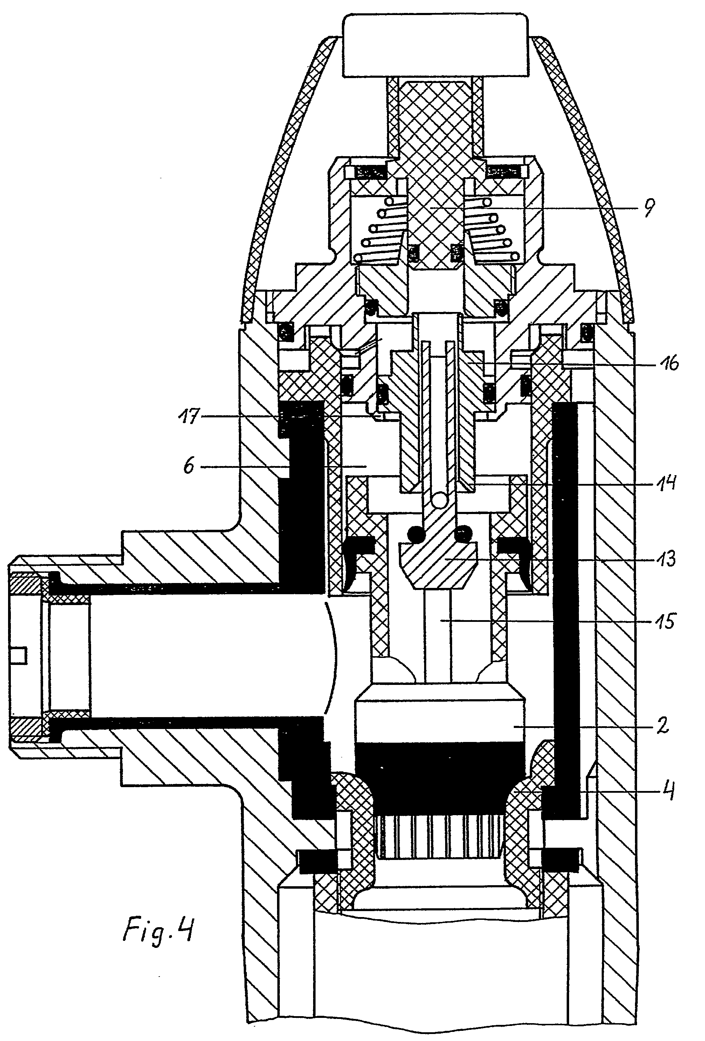

Bei dem Druckspüler der Figuren 3 und 4 ist derjenige Teil des Entlastungsventils 8, der den Verschlußsitz 14 für den Verschlußstößel 13 enthält, nicht wie beim Ausführungsbeispiel der Figuren 1 und 2 ein ortsfester Teil des Druckspülergehäuses, sondern ein Kolbenkörper 16, der im Druckspülergehäuse abgedichtet und gleichachsig zum Verschlußstößel 13 verschiebbar ist. Wird die Druckspülertaste 9 nur leicht gedrückt, stößt die Taste 9 nur gegen das obere Ende des Verschlußstößels 13 an und wird, wie in Figur 3 gezeigt, nur der Verschlußstößel 13 vom Verschlußsitz 14 zum Öffnen des Entlastungsventils 8 abgedrückt, womit analog wie zu dem Ausführungsbeispiel der Figuren 1 und 2 beschrieben ein Spülvorgang mit großer Spülmenge erfolgt. Wird hingegen die Druckspülertaste 9 bewußt und absichtlich fester und tiefer gedrückt, stößt die Taste nach dem Abdrücken des Verschlußstößels 13 vom Verschlußsitz 14 auch gegen das obere Ende des Kolbenkörpers 16 und wird, wie in Figur 4 gezeigt, der Kolbenkörper mittels der Taste 9 heruntergeschoben, wobei die Herunterschiebbarkeit durch eine Hubbegrenzung 17 begrenzt ist. Hierdurch wird das Maß, um das sich der Verschlußstößel 13 von dem Verschlußsitz 14 bis zum Mitnehmeranschlag 15 des Spülventilkolbens absenkt, kleiner als im Falle der Figur 3, so daß der Spülventilkolben insgesamt weniger Weg und weniger Zeit braucht, um den Verschlußstößel 13 gegen den heruntergeschobenen Verschlußsitz 14 anzudrücken und danach sich auf den eigenen Absperrsitz 4 abzusenken. Während der Öffnungs- und Schließphase des Spülventilkolbens 2 fließt also nur eine geringere Spülmenge durch den Druckspüler als im Falle der Figur 3. Die Spülmenge hat den vorbestimmten, zulässig kleinsten Betrag, wenn der Kolbenkörper 16 durch gewollt festes Drücken der Taste 9 bis auf die Hubbegrenzung 17 heruntergeschoben wird. Durch den Druckaufbau in der Druckausgleichskammer 6 nach dem Schließen des Entlastungsventils, durch den der Spülventilkolben 2 in die Schließstellung heruntergeschoben wird, wird auch der Kolbenkörper 16 wieder in die Ausgangsstellung hochgeschoben.

**Patentansprüche**

1. Druckspüler für Wasserklosetts, mit einem Gehäuseeintritt (5) für den Wasserzulauf, mit einem durch Federkraft (3) auf einen Absperrsitz (4) im Druckspülergehäuse (1) gedrückten, durch den Wasserdruck am Gehäuseeintritt (5) in die Öffnungsstellung anhebbaren Spülventilkolben (2), mit einer den Spülventilkolben (2) in der Schließrichtung beaufschlagenden Druckausgleichskammer (6), die durch eine Zulaufdüse (7) mit dem Gehäuseeintritt (5) verbunden ist, und mit einem manuell in die Öffnungsstellung betätigbaren Entlastungsventil (8), über welches Wasser aus der Druckausgleichskammer (6) in einen zum Wasseraustrittsende des Gehäuses führenden Ablaufkanal (10) ablaßbar ist, dadurch gekennzeichnet, daß das Entlastungsventil (8) mit einer den Wasseraustritt aus der Druckausgleichskammer (6) verzögernden Entlastungsdüse (11) ausgebildet ist, deren Drosselquerschnitt um einen vorbestimmten kleinen Betrag größer ist als der Drosselquerschnitt der Zulaufdüse (7), und daß das Entlastungsventil einen Verschlußstößel (13) aufweist, der von einer gegen eine Rückstellfederkraft manuell betätigbaren Druckspülertaste (9) abgetrennt ist und durch einen Berührungsstoß der Taste vom Verschlußsitz (14) des Entlastungsventils nach unten abdrückbar ist und danach selbsttätig bis auf einen Mitnehmeranschlag (15) des Spülventilkolbens (2) abzusinken vermag.

2. Druckspüler nach Anspruch 1, dadurch gekennzeichnet, daß der den Verschlußsitz (14) für den Verschlußstößel (13) enthaltende Teil des Entlastungsstößels aus einem im Druckspülergehäuse abgedichtet und gleichachsig zum Verschlußstößel verschiebbaren Kolbenkörper (16) besteht, gegen den die Druckspülertaste (9), nach dem Abdrücken des Verschlußstößels vom Verschlußsitz, anschlägt und der mittels der Taste bis gegen eine Hubbegrenzung (17) herunterschiebbar ist.

**Claims**

1. A flushing valve for lavatories, having: a casing inlet (5) for the water supply; a flushing valve piston (2) which is forced by the force of a spring (3) on to a shutoff seat (4) in the flushing valve casing (1) and can be raised into the opening position by the water pressure at the casing inlet (5); a pressure equalizing chamber (6) which acts on the flushing valve piston (2) in the closure direction and is connected via a supply nozzle (7) to the casing inlet (5); and a relief valve (8) which can be actuated manually into the opening position and via which water from the pressure equalization chamber (6) can be discharged into a discharge duct (10) extending to the water outlet end of the casing, characterized in that the relief valve (8) is constructed with a relief nozzle (11) which delays the discharge of water from the pressure equalization chamber (6) and whose throttle cross-section is larger by a small predetermined amount than the throttle cross-section of the supply nozzle (7), and the relief valve has a closure tappet (13), which is separated from a flushing valve button (9) actuatable manually against the force of a return spring and which can be forced downwards by a contact push on the button from the closure seat (14) of the relief valve and thereafter can spontaneously descend as far as an entraining stop (15) of the flushing valve piston (2).

2. A flushing valve according to claim 1, characterized in that the portion of the relief valve which contains the closure seat (14) for the closure tappet (13) comprises a piston element (16) which is sealed in the flushing valve casing and can be slid coaxially with the closure tappet and which is abutted by the flushing valve button (9), after the closure tappet has been forced off the closure seat, and can be pushed down by means of the button until it reaches a valve stop (17).

**Revendications**

1. Robinet de chasse d'eau pour water-closets qui comprend, dans son enveloppe, une entrée (5) pour l'amenée de l'eau, un piston (2) de soupape de vidange qui est poussé, par un ressort (3), contre un siège d'arrêt (4) ménagé dans l'enveloppe (1) du robinet de chasse d'eau et qui, sous l'action de la pression exercée par l'eau à l'entrée (5) de l'enveloppe, peut-être soulevé pour se placer dans la position d'ouverture, une chambre (6) d'égalisation des pressions qui pousse le piston (7) de la soupape de vidange dans le sens de la fermeture et qui est relié par une buse d'amenée (7) à l'entrée (5) de l'enveloppe, une soupape de trop-plein (8) qui peut-être manœuvrée à la main pour être placée dans la position d'ouverte et par laquelle l'eau peut s'échapper pour aller de la chambre (6) d'égalisation des pressions à un conduit de sortie (10) aboutissant à l'extrémité de sortie de l'eau ménagée dans l'enveloppe, caractérisé en ce que la soupape de trop-plein (8) comporte une buse de trop-plein (11) qui ralentit la sortie de l'eau depuis la chambre (6) d'égalisation des pressions et dont la section d'étranglement n'est que très légèrement supérieure, dans une proportion déterminée, à la section d'étranglement de la buse d'amenée (7) et en ce que la soupape de trop-plein comporte un poussoir de fermeture (13) qui est distinct d'une touche (9) du robinet de chasse d'eau qui peut-être commandée à la main en s'opposant à la force de rappel d'un ressort, peut, lorsque la touche subit une poussée par contact, s'écarter, vers le bas, du siège de fermeture (14) de la soupape de trop-plein et peut ensuite s'abaisser automatiquement jusqu'à une butée d'entraînement (15) du piston (2) de la soupape de vidange.

2. Robinet de chasse d'eau selon la revendication 1, caractérisé en ce que la partie de la soupape de trop-plein qui contient le siège de fermeture (14) pour le poussoir de fermeture (13) est constituée par un corps de piston (16) qui peut se déplacer dans l'enveloppe du robinet en assurant l'étanchéité et suivant le même axe que le poussoir de fermeture, et contre lequel la touche (9) du robinet de chasse d'eau vient buter après que le poussoir de fermeture a été écarté du siège de fermeture et qui, sous l'action de la touche, peut être abaissé jusqu'à une limite de course (17).

Fig. 1

EP 0 264 638 B1

Fig. 2

*Fig. 3*

Fig. 4